(19) Europäisches Patentamt / European Patent Office / Office européen des brevets

(11) **EP 1 905 547 A2**

(12) **EUROPEAN PATENT APPLICATION**

(43) Date of publication:
**02.04.2008 Bulletin 2008/14**

(51) Int Cl.:
***B25J 9/16*** *(2006.01)*

(21) Application number: **07018221.7**

(22) Date of filing: **17.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **25.09.2006 JP 2006259268**

(71) Applicant: **FANUC LTD**
**Minamitsuru-gun,**
**Yamanashi 401-0597 (JP)**

(72) Inventors:
• **Kato, Tetsuaki**
**Hadano-shi**
**Kanagawa 259-1326 (JP)**
• **Kuroshita, Teruki**
**Minamitsuru-gun**
**Yamanashi 401-0511 (JP)**

(74) Representative: **Thum, Bernhard**
**Wuesthoff & Wuesthoff**
**Patent- und Rechtsanwälte**
**Schweigerstrasse 2**
**81541 München (DE)**

(54) **Robot controller performing soft control**

(57) The robot controller (RC) performs soft control in which a virtual spring or virtual damper is made to act between a tool of a robot and an objective workpiece. The robot controller includes: gain reducing arrangement (41, 42) for selecting an articulated shaft from articulated shafts (J1-J6) of the robot based on a soft control starting position where the soft control is started and the virtual spring or virtual damper when performing the soft control, and reducing a position gain and/or speed gain of the certain articulated shaft lower than a position gain normal value and/or speed gain normal value of the selected articulated shaft; and a , correction torque reducing arrangement (43) for reducing a correction torque of the selected articulated shaft calculated based on the soft control starting position and the virtual spring or virtual damper lower than a correction torque normal value of the selected articulated shaft when performing the soft control. As a result, it is possible to overcome obstacles to smooth action in the direction in which the virtual spring or virtual damper is made to act.

Fig.1

EP 1 905 547 A2

**Description**

BACKGROUND OF THE INVENTION

1. Field of the Invention

The present invention relates to a robot controller for controlling an industrial robot, hereinafter referred to as simply a "robot".

2. Description of the Related Art

A servo motor which drives a plurality of articulated shafts of a robot is usually controlled by a servo system having a position control loop and a speed control loop. When a tool front end point of a robot moves toward a target position by the servo system, if the tool front end point encounters and collides with an obstacle, a phenomenon in which the tool front end point of the robot will attempt to continue moving toward the target position against the obstacle.

This phenomenon can be explained as follows. Although the servo motor attempts to continue moving the tool front end point toward the target position regardless of the presence of an obstacle, the obstacle prevents the tool front end point from moving toward the target position, and therefore a positional deviation e is increased. As a result, a speed command vc, which is derived by multiplying this positional deviation by a position loop gain Kp, is also increased. The difference between the increased speed command vc and the speed v of the motor (when the tool front end point is in contact with the obstacle, the speed v is considered to be nearly "0") is integrally increased by using an integrator in the speed control loop. Thus, a torque command tc becomes a larger value.

Finally, the servo motor outputs a maximum torque to achieve the movement toward the target position, which can cause the robot to stop, and fracture accidents (or interference accidents) of a workpiece, an end effector, and the like. In order to avoid such problems, a method in which the values of speed command vc and torque command tc is prevented from increasing by reducing the position loop gain Kp and the speed loop gain Kv if necessary.

According to this method, gain values Kp' and Kv' for soft control are set in advance, and gains are switched from gain values Kp and Kv for normal control to gain values Kp' and Kv' for soft control when inputting a soft control command.

Such soft control makes articulated shafts of a robot (hereinafter referred to as "shafts" simply in some cases) soft and exercises "a soft float function in each shaft space" (hereinafter referred to as "soft float on each shaft").

Japanese Unexamined Patent Publication No. 2005-219205 discloses a soft control in which parameters (Kx, Ky, Kz) with respect to a virtual spring set in an orthogonal coordinate system are used to determine forces (Fx, Fy, Fz) on the orthogonal coordinate system, the forces are transformed into forces in a tool coordinate system, torques Ti of the individual shafts according to Newton-Euler method are calculated, and the calculated torques Ti are each used as a torque command for the corresponding shaft.

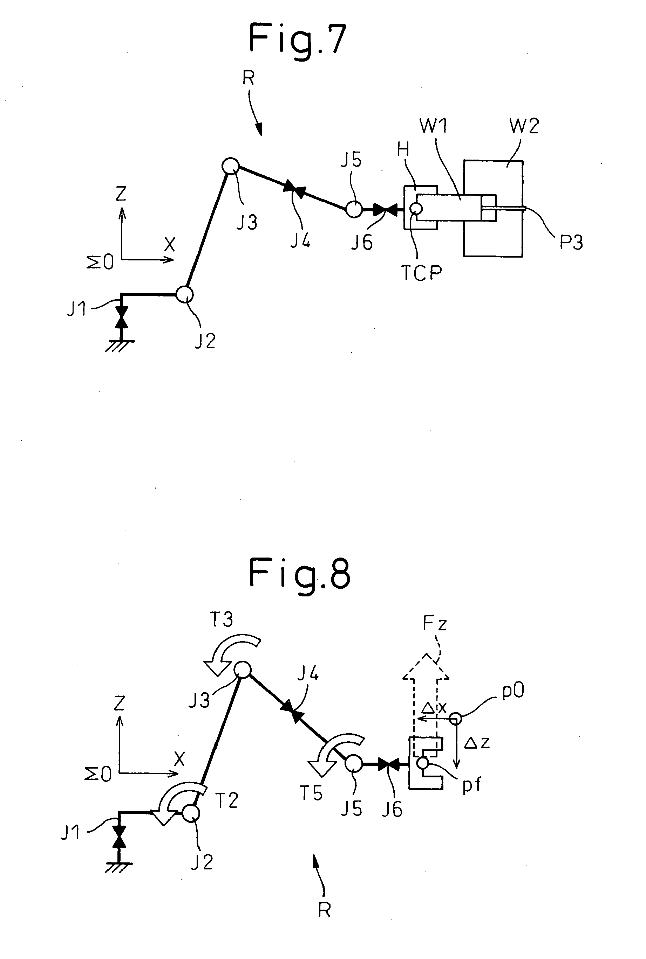

Figure. 7 is an illustration showing an example of soft control (hereinafter refereed to as "orthogonal soft float") in the orthogonal coordinate system. Robot R has six articulated shafts J1-J6 arranged as shown in the drawing, and a tool H attached to a front end of robot R. The orthogonal coordinate system Σ0 is defined as shown in the drawing.

When a molded article W1 is extruded in the -X direction by a pin P3 inside a molding machine W2, robot R has to perform orthogonal soft float, which is soft in the X direction and rigid in the Z direction, following the move of molded article W1 for the purpose of taking out molded article W1. Specifically, in FIG. 7, the X direction is a soft direction, i.e. a direction in which an operation is to be performed smoothly, and the Z direction is a rigid direction, i.e. a direction in which any operation should not be performed.

Figure 8 is an illustration explaining a force acting when the orthogonal soft float is executed in one example. In FIG. 8, the following condition is set as virtual spring's parameters Kz and Kz in the X and Z directions: (Kx, Kz) = (0, Kz). Incidentally, Ky is not shown for the sake of simplicity of explanation.

The difference between a target position p0 and a feedback position pf as shown in FIG. 8 is produced by the extruding force for extruding molded article W1 by pin P3 and other disturbances. The difference is defined as a deviation and represented by pf-p0 = ($\Delta$x, $\Delta$z). The forces that the virtual spring develops with respect to $\Delta$x and $\Delta$z are -Kx$\Delta$x and -Kz$\Delta$z respectively. As already described, the condition (Kx, Kz) = (0, Kz) is set, and therefore only the force -Kz$\Delta$z = Fz acts here.

In the case where a torque of each shaft when a force Fz is produced at a tool front end point TCP of tool H is calculated by Newton-Euler method, torques T2, T3 and T5 with respect to the articulated shafts J2, J3 and J5 are obtained. In articulated shaft J3, the torque T3 acts in a direction that an operation toward the -X direction is prevented, as can be seen from FIG. 8. As a result, softness or a smooth action in the X direction is prevented. Therefore, in the case where the robot is operated against torque T3, a larger force is needed in comparison to the cases of soft float for the each shaft. However, in the case of Japanese Unexamined Patent Publication No. 2005-219205, it is impossible to adjust torque only for a particular articulated shaft, e.g. articulated shaft J3 on which torque T3 acts.

This invention was made in consideration of the foregoing circumstances. Therefore, it is an object of the invention to provide a robot controller which can overcome obstacles to smooth action in a direction in which a virtual spring, etc. is made to act when soft control is executed.

SUMMARY OF THE INVENTION

To achieve the above-described object, according to the first aspect of the invention, a robot controller is provided for controlling a robot having a plurality of articulated shafts, the robot controller performing soft control in which a virtual spring is made to act between a tool of the robot and an objective workpiece in a direction defined by a tool coordinate system in a fixed position-and-orientation with respect to the tool of the robot or a working coordinate system in a fixed position-and-orientation with respect to the objective workpiece, including: gain reducing arrangement for selecting an articulated shaft from a plurality of articulated shafts of the robot based on a soft control starting position where the soft control is started and the virtual spring when performing the soft control, and reducing at least one of position gain and speed gain of the selected articulated shaft lower than at least one of position gain normal value and speed gain normal value of the selected articulated shaft; and a correction torque reducing arrangement for reducing a correction torque of the selected articulated shaft calculated based on the soft control starting position and the virtual spring lower than a correction torque normal value of the selected articulated shaft when performing the soft control.

According to the second aspect of the invention, there is provided a robot controller for controlling a robot having a plurality of articulated shafts, the robot controller performing soft control in which a virtual damper is made to act between a tool of the robot and an objective workpiece in a direction defined by a tool coordinate system in a fixed position-and-orientation with respect to the tool of the robot or a working coordinate system in a fixed position-and-orientation with respect to the objective workpiece, including: gain reducing arrangement for selecting, an articulated shaft from the plurality of articulated shafts of the robot based on a soft control starting position where the soft control is started and the virtual damper when performing the soft control, and reducing at least one of position gain and speed gain of the selected articulated shaft lower than at least one of position gain normal value and speed gain normal value of the selected articulated shaft; and a correction torque reducing arrangement for reducing a correction torque of the selected articulated shaft calculated based on the soft control starting position and the virtual damper lower than a correction torque normal value of the selected articulated shaft when performing the soft control.

In other words, in the first and second aspects, the position gain and/or speed gain with respect to the selected articulated shaft can be reduced by the gain reducing arrangement, and the torque with respect to the selected articulated shaft can be reduced by the correction torque reducing arrangement. As a result, it is possible to overcome obstacles to smooth action in the direction in which the virtual spring or virtual damper is made to act. In other words, with the first and second aspects, an operation in a softening direction can be performed with a small amount of force.

According to the third aspect of the invention, as in the first or second aspect, a Jacobian matrix for conversion from the articulated shafts to the working coordinate system in the soft control starting position is calculated, wherein an articulated shaft corresponding to a column having a largest absolute value in a row of the Jacobian matrix corresponding to a direction in which the soft control is performed, is selected as the selected articulated shaft.

According to the fourth aspect of the invention, as in any one of the first to third aspects, an amount for reducing at least one of position gain and speed gain in the selected articulated shaft is set automatically.

According to the fifth aspect of the invention, as in any one of the first to fourth aspects, an amount for reducing the correction torque in the selected articulated shaft is set automatically.

In other words, with the third to fifth aspects, setting for selecting the articulated shaft, and settings of amounts for reducing the position gain, speed gain, and/or correction torque can be made automatically. Therefore even an inexperienced operator can appropriately control the robot.

According to the sixth aspect of the invention, as in any one of the first to fifth aspects, before the soft control is started, the tool of the robot is preliminarily moved a specified distance in a specified direction by normal control.

In other words, with the sixth aspect, a preliminary operation for slightly proving in a soft direction by the normal control, is performed, whereby friction depending on the articulated shaft can be compensated for by suppressing the deviation of the direction of an operation from an orthogonal direction.

According to the seventh aspect of the invention, as in any one of the first to fifth aspects, when the soft control is performed, a specified amount of correction torque in a specified direction is added.

In other words, with the seventh aspect, even in the case where the distance required for the preliminary operation cannot be ensured because of limitations of the layout of the robot and peripheral apparatuses, friction depending on the articulated shaft can be compensated for by suppressing the deviation of the direction of an operation from an orthogonal direction.

According to the eighth aspect of the invention, as in any one of the first to fifth aspects, when the soft control is performed, a periodic correction torque is added to the torque.

In other words, with the eighth aspect, even in the case where the direction of an operation during the soft control is unknown, friction depending on the articulated shaft can be compensated for by suppressing the deviation of the direction of an operation from an orthogonal direction.

According to the ninth aspect, as in any one of the first to eighth aspects, a coordinate system or tool coordinate system for performing the soft control is decided from at least two positions and orientations on a specified orthogonal coordinate system.

According to the tenth aspect of the invention, as in the sixth aspect, a direction for performing preliminary movement is decided from at least two positions and orientations on a specified orthogonal coordinate system.

According to the eleventh aspect, as in the seventh aspect, a direction of the correction torque is decided from at least two positions and orientations on a specified orthogonal coordinate system.

In other words, with the ninth to eleventh aspects, it is possible for an operator to specify a direction on the coordinate system intuitively and clearly.

The above-described and other objects, features, and advantages will become more apparent from the detailed descriptions of the embodiments of the invention as illustrated by the accompanying drawings.

BRIEF DESCRIPTION OF THE DRAWINGS

FIG. 1 is an illustration showing a robot controller according to the invention;

FIG. 2 is a functional block diagram of the robot controller shown in FIG. 1;

FIG. 3 shows a parameter setting screen displayed on a teaching control panel;

FIG. 4 is a first flowchart when the robot controller exercises an orthogonal soft float function;

FIG. 5 is a second flowchart when the robot controller exercises the orthogonal soft float function;

FIG. 6 is a functional block diagram of a control system when the robot controller exercises the orthogonal soft float function;

FIG. 7 is an illustration showing an example of soft control on an orthogonal coordinate system; and

FIG. 8 is an illustration for explanation of a force acting when the orthogonal soft float is exercised in the example.

DETAILED DESCRIPTION

The embodiments of the invention will be described below with reference to the accompanying drawings. In the drawings, similar parts are identified by the similar reference characters. The reduction of the drawings have been appropriately made for the sake of clarity.

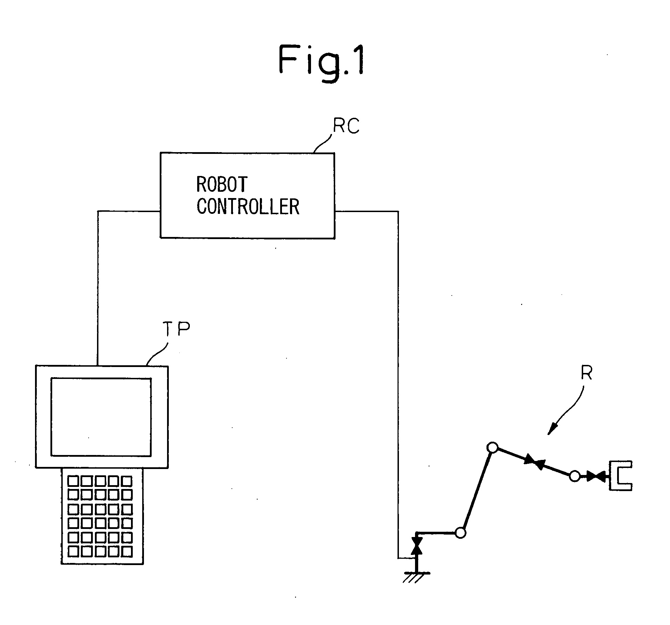

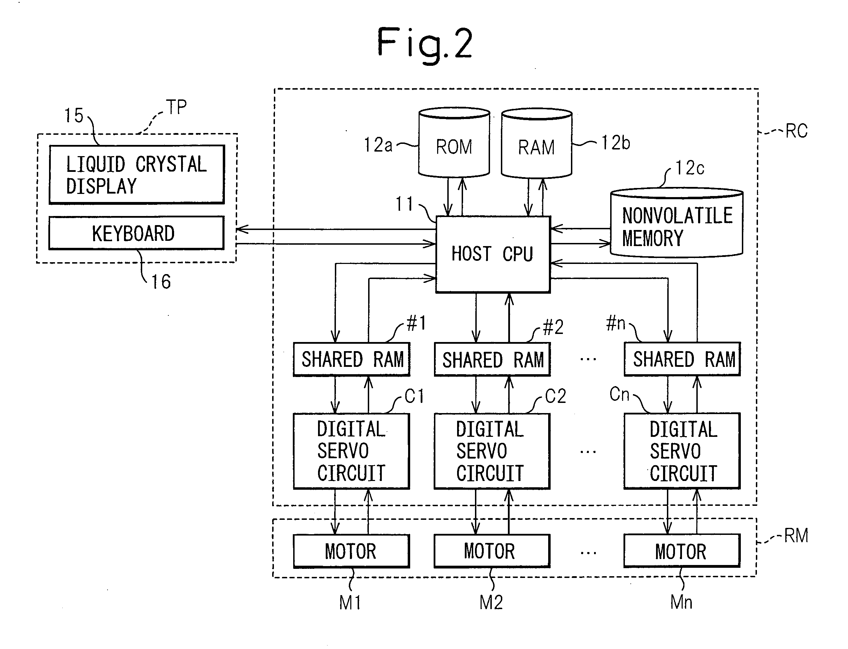

FIG. 1 is an illustration showing a robot controller according to the invention. FIG. 2 is a functional block diagram of the robot controller shown in FIG. 1. As shown in these drawings, the robot controller RC is connected to a teaching control panel TP and a robot R, and the controller is connected to a robot mechanism section RM of the robot R.

As shown in FIG. 2, the robot controller RC includes a host CPU 11 which controls the entire robot controller RC. The robot controller RC also includes: a ROM 12a which stores various system programs; a RAM 12b used by the host CPU 11 to temporarily store data; and a nonvolatile memory 12c in which various programs relating to an action of the robot, relevant setting values and the like are stored.

As shown in FIG. 2, the host CPU 11 is connected with shared RAMs #1-#n, and to the shared RAMs #1-#n, digital servo circuits C1-Cn are connected. The shared RAMs #1-#n each serve to transmit a transfer command or control signal output from the host CPU 11 to each of processor of corresponding one of the digital servo circuits C1-Cn, and transmit various signals from the processors of the digital servo circuits C1-Cn to the host CPU 11. Therefore, the digital servo circuits C1-Cn each include a processor, a ROM, a RAM, etc., (not shown).

The number of the shared RAMs #1-#n and the number of the digital servo circuits C1-Cn correspond to the number of motors M1-Mn of the robot mechanism section RM of the robot. The motors M1-Mn are used to drive articulated shafts of the robot respectively. A typical hexaxial vertical articulated robot includes six articulated shafts J1-J6. Therefore, the number of motors, shared RAMs, digital servo circuits are six respectively.

As shown in the drawing, the teaching control panel TP includes a liquid crystal display 15 and a keyboard 16, which are used to input and change data in the above described program 3 and to input and change relevant setting values for the above-described programs.

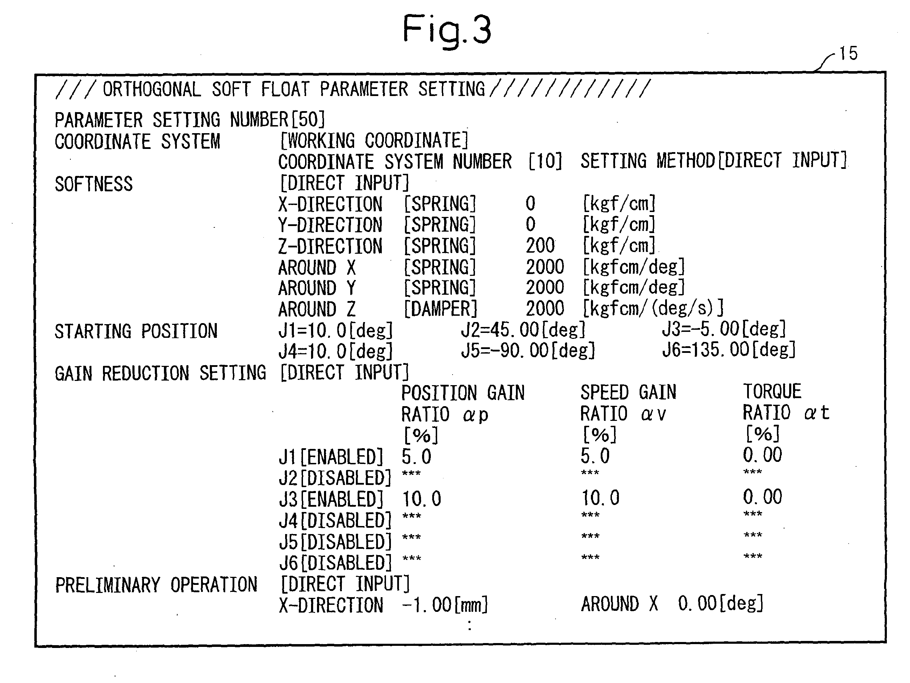

FIG. 3 shows a parameter setting screen displayed on the teaching control panel TP. Before performing soft control, an operator opens a parameter setting screen shown in FIG. 3 on the liquid crystal display 15 of the teaching control panel TP.

Then, in the item "Softness" of the setting screen, the operator makes settings to place a "virtual spring" or "virtual damper" for X, Y and Z directions. On the actual screen, the operator may simply enter "spring" or "damper" through the keyboard 16. X, Y and Z directions correspond to directions of coordinate axes of a predetermined orthogonal coordinate system Σ0 (see FIG. 7).

The operator then enters a proportionality constant in association with the set spring or damper. In the setting screen shown in FIG. 3, "spring" was entered for X, Y and Z directions, and numeric values 0, 0 and 200 (kgf/cm) were entered for the directions respectively. Incidentally, the numeric values to be entered are equal to or larger than zero. The smaller the numeric value to be entered is, the softer state is set; the larger the numeric value is, the more rigid state is set. Therefore, in this case, X and Y directions are directions desired for soft control.

The numeric values, when "spring" is set, correspond to proportionality constants $K_x$, $K_y$ and $K_z$ of a virtual spring on the orthogonal coordinate system Σ0 respectively. The numeric values to be entered when "damper" is set correspond to proportionality constants $D_x$, $D_y$ and $D_z$ of a virtual damper on the orthogonal coordinate system Σ0. In the setting screen shown in the drawing, a virtual spring or virtual damper may be set around X, Y and Z axis to enter numeric values likewise.

In the setting screen shown in FIG. 3, the "Setting to decrease Gain" exists. In this item, the articulated shafts which have a great influence on the actions in already-set directions desired for soft control (X and Y directions in FIG. 3) are automatically selected as follows.

When the operator enters a starting position in an item "Starting Position" of the setting screen shown in FIG. 3, the robot controller RC calculates a value of Jacobian matrix J, at the starting positions, from articulated shafts to the working coordinates. Then, the robot controller RC reduces a position gain and/or speed gain of the articulated shaft corresponding to a column having the largest absolute value in a row, for which a virtual spring is set, corresponding to a soft direction. Therefore, the robot controller RC displays "Enabled" in Gain Reduction Setting for the articulated shafts.

Specifically, when the operator enters a starting position, the robot controller RC calculates Jacobian matrix J as shown below.

$$
J = \begin{pmatrix}
\partial X/\partial J1, & \partial X/\partial J2, & \partial X/\partial J3, & \partial X/\partial J4, & \partial X/\partial J5, & \partial X/\partial J6 \\
\partial Y/\partial J1, & \partial Y/\partial J2, & \partial Y/\partial J3, & \partial Y/\partial J4, & \partial Y/\partial J5, & \partial Y/\partial J6 \\
\partial Z/\partial J1, & \partial Z/\partial J2, & \partial Z/\partial J3, & \partial Z/\partial J4, & \partial Z/\partial J5, & \partial Z/\partial J6 \\
\partial RX/\partial J1, & \partial RX/\partial J2, & \partial RX/\partial J3, & \partial RX/\partial J4, & \partial RX/\partial J5, & \partial RX/\partial J6 \\
\partial RY/\partial J1, & \partial RY/\partial J2, & \partial RY/\partial J3, & \partial RY/\partial J4, & \partial RY/\partial J5, & \partial RY/\partial J6 \\
\partial RZ/\partial J1, & \partial RZ/\partial J2, & \partial RZ/\partial J3, & \partial RZ/\partial J4, & \partial RZ/\partial J5, & \partial RZ/\partial J6
\end{pmatrix}
$$

In the above formula, the first row corresponds to soft X direction, and the second row corresponds to soft Y direction. Then, the robot controller RC selects, from the first row ($\partial x/\partial J1$, $\partial x/\partial J2$, $\partial x/\partial J3$, $\partial x/\partial J4$, $\partial x/\partial J5$, $\partial x/\partial J6$) of Jacobian matrix J, a column having the maximum absolute value. When such column is $\partial x/\partial J3$, the robot controller RC sets the gain reduction setting of a corresponding shaft J3 to be "Enabled" automatically (refer to the item " Gain Reduction Setting" in FIG 3).

Likewise, the robot controller RC selects a column having the maximum absolute value from the second row ($\partial Y/\partial J1$, $\partial Y/\partial J2$, $\partial Y/\partial J3$, $\partial Y/\partial J4$, $\partial Y/\partial J5$, $\partial Y/\partial J6$) of Jacobian matrix J. When the appropriate column is $\partial Y/\partial J1$, the robot controller RC sets the gain reduction setting of a corresponding shaft J1 to be "Enabled" automatically (refer to the item " Gain Reduction Setting" in FIG 3).

The articulated shaft's selection as described above may be done by an apparatus different from the robot controller RC shown in FIG. 1. For example, another computer's software determines the articulated shaft for which Gain Reduction Setting is to be made "Enabled", and an operator can enter the articulated shaft for gain reduction through the teaching control panel TP.

After the articulated shaft has been set, the percentage of reduction in position gain and/or speed gain of the articulated shaft is set. Specifically, the Position gain ratio $\alpha p$ (= after-reduction position gain $Kps$/normal position gain $Kp$) and Speed Gain Ratio $\alpha v$ (= after-reduction speed gain $Kvs$/normal speed gain $Kv$), which are each an item showing the ratio of a before-reduction gain and an after-reduction gain, are entered ($0 \leq \alpha p \leq 100$, and $0 \leq \alpha v \leq 100$). In FIG. 3, the position gain ratio $\alpha p$ and speed gain ratio $\alpha v$ of the articulated shaft J1 are both set to 5%; the position gain ratio $\alpha p$ and speed gain ratio $\alpha v$ of the articulated shaft J3 are both set to 10%.

Also, the percentage $\alpha t$ ($0 \leq \alpha t \leq 100$) to be added to a torque command to (described later), from the correction torque $Ti$ (described later) for each of the articulated shafts J1 and J3 is entered. In FIG. 3, the percentages of the correction torques of the articulated shafts J1 and J3 are both set to 0%.

In the case where the robot controller RC has the function of switching between soft control gains Kp' and Kv' and normal control gains Kp and Kv, ratios of the after-reduction gains Kps and Kvs and the soft control gains Kp' and Kv' may be entered as $\alpha p$ and $\alpha v$, respectively. In this connection, it should be noted that there are the following relationships between the soft control gains Kp' and Kv' and the normal control gains Kp and Kv:

$$Kp > Kp',$$

and

$$Kv > Kv'.$$

The operator may enter the settings of the ratios and percentages through the keyboard 16. However, the robot controller RC may decide the settings based on a predetermined rule and display only the result of the decision on the liquid crystal display 15. For example, predetermined constants e.g. 10%, 10%, and 0% may be set automatically as the position gain ratio $\alpha p$ and the speed gain ratio $\alpha v$, and the percentage $\alpha t$ respectively (($\alpha p$, $\alpha v$, $\alpha t$) = (10%, 10%, 0%)). In this case, it should be understood that even an inexperienced operator can adequately operate the robot.

The robot R is normally operated by the robot controller RC. When the orthogonal soft float is desired, the operator sets the orthogonal soft float function Enabled through the teaching control panel TP. The case where the orthogonal soft float is performed refers to the case where the robot R has to operate softly following the movement of the molded article W1 in X direction and operate rigidly in Z direction for the purpose of taking out the molded article W1 as shown in FIG. 7, for example.

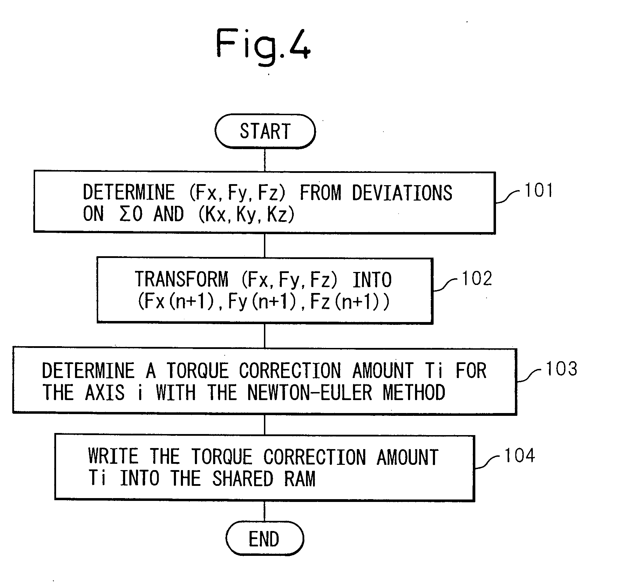

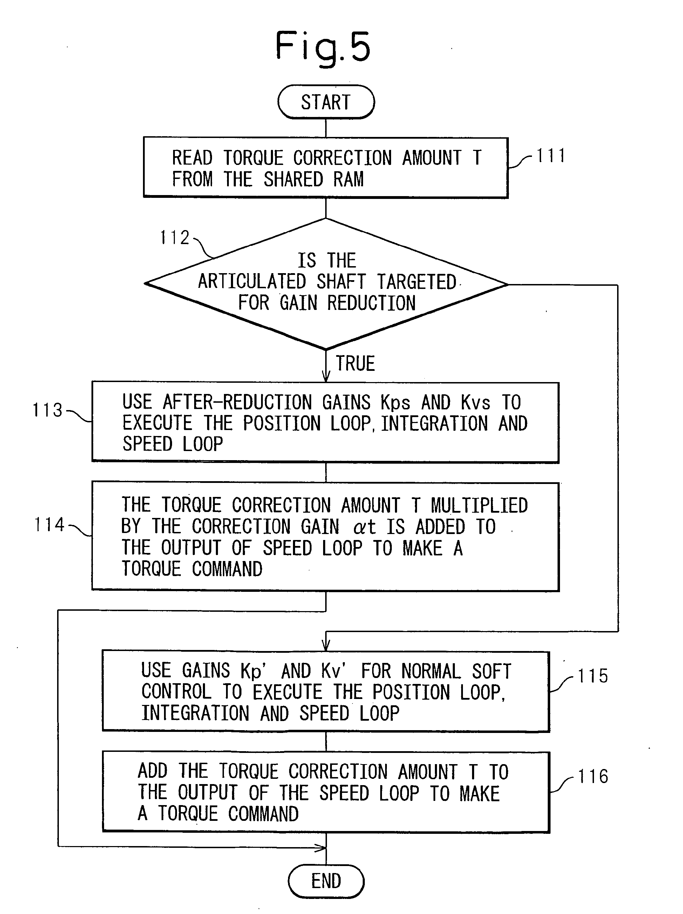

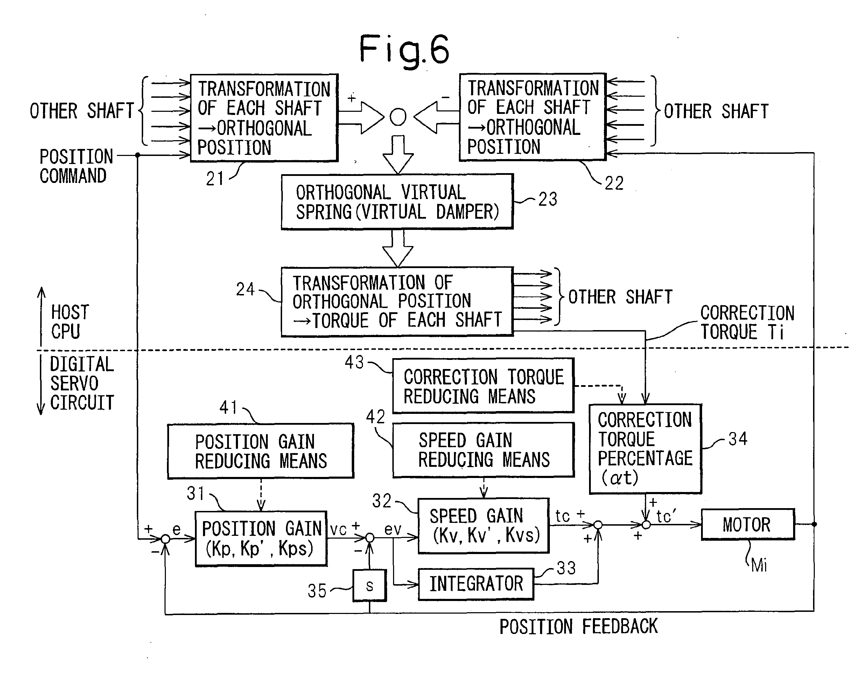

Figures 4 and 5 are flowcharts when the robot controller RC of the invention performs the orthogonal soft float function. FIG. 6 is a functional block diagram of a control system when the robot controller RC performs the orthogonal soft float function. The orthogonal soft float function that the robot controller RC performs will be described below with reference to FIGs. 4 to 6.

In the case where the robot controller RC has the function of switching between the soft control gains Kp' and Kv' and the normal control gains Kp and Kv, at the time of starting the orthogonal soft float, the position gain Kp and speed gain Kv of all the articulated shafts are changed to the position gain Kp' and the speed gain Kv' for soft control respectively.

In the host CPU 11, the process according to the flowchart shown in FIG. 4 are carried out at predetermined intervals. At step 101 shown in FIG. 4, an orthogonal command position is calculated from a position command for each articulated shaft by a sequential kinematics, and an orthogonal feedback position is calculated from the position feedback for each articulated shaft by a sequential kinematics. Then, the differences between the orthogonal command positions and orthogonal feedback positions are calculated as positional deviations ($\Delta x$, $\Delta y$, $\Delta z$), i.e. soft control starting positions (refer to blocks 21 and 22 in FIG. 6).

Subsequently, the positional deviations are multiplied by parameters (Kx, Ky, Kz) of a virtual spring entered on the setting screen shown in FIG. 3, whereby forces (Fx, Fy, Fz) on the orthogonal coordinate system $\Sigma 0$ are calculated ((Fx, Fy, Fz) = (Kx, Ky, Kz)·(-$\Delta x$, -$\Delta y$, -$\Delta z$)) (refer to Block 23 in FIG. 6).

Then, at Step 102, orientation data of the robot is used to transform forces (Fx, Fy, Fz) on the orthogonal coordinate system $\Sigma 0$ into forces (Fx(n+1), Fy(n+1), Fz(n+1)) on the tool coordinate system $\Sigma n+1$.

After that, at Step 103, a correction torque Ti (i= 1-n) for each shaft is calculated from the current position of the robot and forces (Fx(n+1), Fy(n+1), Fz(n+1)) on the tool coordinate system $\Sigma n+1$ according to the Newton-Euler method (refer to the block 24 in FIG. 6).

Then, at Step 104, the correction torques Ti thus obtained for the articulated shaft are stored in the respective shared RAMs #1-#n. The above process is performed by the host CPU 11 of the robot controller RC.

Then, the process according to the flowchart shown in FIG. 5 is conducted. At Step 111 shown in FIG. 5, the correction torques Ti in the shared RAMs #1-#n are sent to the respective digital servo circuits C1-Cn. The following process shown in FIG. 5 is performed in each of the digital servo circuits C1-Cn at predetermined intervals.

Then, it is judged at Step 112 whether or not the articulated shaft Ji corresponding to one digital servo circuit Ci is an articulated shaft, which has been subjected to "Gain Reduction Setting" in FIG. 3. When it is judged that the articulated axis Ji has undergone "Gain Reduction Setting," the process proceeds to Step S113.

At Step 113, the position gain reducing means 41 multiplies the normal position gain Kp or Kp' by the position gain ratio $\alpha p$ (see FIG. 3) thereby to calculate an after-reduction position gain Kps. Likewise, the speed gain reducing means 42 multiplies the normal speed gain Kv or Kv' by the speed gain ratio $\alpha v$ (see FIG. 3) thereby to calculate an after-reduction speed gain Kvs. Such processes to reduce the position gain and the speed gain are performed by the position gain reducing means 41 and the speed gain reducing means 42 shown in FIG. 6 respectively.

The block 31 shown in FIG. 6 is a section for the position loop gain Kp, the block 32 is a section for the speed loop gain Kv, the block 33 is an integral section, and the block 34 is a section for the percentage $\alpha t$ of each correction torque.

At Step 113, the above-described after-reduction gains Kps and Kvs are used in the blocks 31 and 32 respectively. As can be seen from FIG. 6, a positional deviation e created from a position command of the motor Mi produced in the robot controller RC and an actual motor position fed back from the motor is input to the block 31. Then, in the block 31, the positional deviation e is multiplied by the after-reduction gain Kps, whereby the speed command vc is created. Further, the speed deviation ev is calculated from the speed command vc and the speed v of the motor. The resultant speed deviation ev is multiplied by the speed loop gain Kvs, and thus the torque command tc is output.

Then, as shown in Step 114 the correction torque reducing means 43 multiplies the correction torque Ti by the above-described percentage $\alpha t$. In FIG. 3, as the percentage $\alpha t$ is set to 0%, the correction torque after alteration is zero. The operation to reduce the correction torque as described above is performed by the correction torque reducing means 43 shown in FIG. 6.

Then, the correction torque after alteration (zero in this case) is added to the torque command tc to make a new torque command tc'. A driving current corresponding to the new torque command tc' is supplied to the motor Mi, and then the processing is terminated.

As described above, in the invention, the position gain reducing means 41 decreases the position gain Kp for a certain articulated shaft to the after-reduction gain Kps, and the speed gain reducing means 42 decreases the speed gain Kv for the same articulated shaft to the after-reduction speed gain Kvs. Further, in the invention, the correction torque reducing means 43 decreases the correction torque Ti for performing a control to realize a virtual spring. Due to the foregoing, the invention can suppress an impediment for a smooth action in direction in which the virtual spring is made to act. In other words, according to the invention, an operation in a softening direction can be performed with a small force.

As described with reference to FIG. 8, in the prior art, in the case where (Kx, Kz) = '(0, Kz) for example, torques T2, T3 and T5 arise for the articulated shafts J2, J3 and J5 respectively. Further, around the articulated shaft J3, the torque T3 acts toward a direction in which an action toward the -X direction is impeded. As a result, the softness in the X direction is hindered.

However, according to the invention, the gain reducing means 41 and 42 can suppress the torque command tc, and additionally the correction torque reducing means 43 can reduce the correction torque Ti to be added. Thus, in the invention, the torque T3 itself can be suppressed by the gain reducing means 41 and 42 and the correction torque reducing means 43. Therefore, the invention can overcome obstacles to the softness in X direction, and therefore a small amount of force is adequate for an operation in the -X direction.

Referring to FIG. 5 again, when it is judged at Step 112 that the articulated shaft is not an articulated shaft, which has undergone "Gain Reduction Setting" yet, the process proceeds to Step 115. In this case, the gains Kp' and Kv' for soft control are used in the blocks 31 and 32. Then, a torque command tc is created in the same way as described above.

Then, at Step 116 the correction torque Ti is added to the torque command tc directly to create a new torque command tc'. In other words, in this case, the gain ratios $\alpha p$ and $\alpha v$ and the percentage $\alpha t$ are not used. After that, a driving current corresponding to the new torque command tc' is supplied to the motor Mi, and then the processing is terminated.

Meanwhile, in the case of correcting the torque command on the orthogonal coordinate system $\Sigma 0$, there is a problem that the friction of the articulated shafts at a point of time is different from each other, and therefore one articulated shaft can be operated immediately, while a slight delay arises for another articulated shaft before the articulated shaft begins to be operated actually, and consequently the operating direction gradually deviates from the orthogonal direction which has been set.

To solve the problem, it is preferable that a preliminary operation, in which the articulated shaft is slightly operated in its soft direction according to the normal control, is performed to accumulate the resultant torque in the integrator 33 of the speed loop. Thus, in the integrator 33, the torque in a direction for compensating the friction, is accumulated. Specifically, before the soft control is started, an operator orders a position control operation for performing the preliminary operation. The friction depending on the articulated shafts can be compensated by such preliminary operation. In other words, the friction depending on the articulated axis is made substantially uniform. Therefore, the deviation of the operating direction from the orthogonal direction can be suppressed by performing such preliminary operation.

Such a preliminary operation for compensating for the friction is not necessarily ordered by an operator. Even if an operator does not order the position control operation, in the case where a soft control starting order is issued, an interpreter in the controller is made to create and execute the preliminary operation, then start the soft control. However, in this case, the direction and distance for the preliminary operation must be decided in advance.

Meanwhile, there may be cases where the distance required for the preliminary operation cannot ensured because of limitations of the layout of the robot and peripheral apparatuses. In such cases, a quantity corresponding to the torque accumulated in the integrator 33 during the preliminary operation has been set in advance. Then, the torque may be added to an output of the speed loop when the soft control is executed. In other words, the preliminary operation does not have to be actually performed, and even if the distance required for the preliminary operation cannot be ensured, the similar effect as described above can be achieved.

In this connection, such method to compensate the friction is limited to the case where the direction of an operation in the soft control is known in advance. In the case where the direction of an operation in the soft control is unknown, a periodic torque in the form of a sine wave, a triangular wave, a rectangular wave or the like, which has an amplitude as large as that of static friction approximately is added. Under such a condition, in the case where an external force is applied from one direction, when the direction of the external force coincides with the direction of the periodic torque, a torque resulting from a combination of the external force and periodic torque is larger than the static friction, so that it becomes possible to start an operation in that direction. In other words, even in the case where the direction of an operation is unknown during the soft control, the friction depending on the articulated shaft can be compensated to suppress the deviation of the direction of an operation from an orthogonal direction.

In the case where the orthogonal soft float is performed on a working coordinate system, or in the case where the direction of the preliminary operation is specified on a coordinate system, it is necessary to set the coordinate system in advance. For that reason, it is expected that a parameter on the coordinate system is input directly. Otherwise, two positions concerning the tool front end point TCP may be taught, whereby the direction along a straight line connecting the two points may be set as one axis (e.g. Z axis) of the working coordinate system of the orthogonal soft float, or as the direction of the preliminary operation. Thus; it is possible for an operator to specify a direction on the coordinate system intuitively and clearly.

While it is not described in detail, in the case where a virtual damper is set using damping parameters Dx, Dy and Dz instead of the virtual spring on the setting screen shown in FIG. 3, speed deviations $\Delta vx$, $\Delta vy$ and $\Delta vz$ are used, which satisfy the following relations: $-Dx \cdot \Delta vx = Fx$; $-Dy \cdot \Delta vy = Fy$; and $-Dz \cdot \Delta vz = Fz$. It should be apparent for those skilled in the art that even in that case, similar effects as described above can be substantially achieved.

While various kinds of parameters are set by entering the screen in the case shown in FIG. 3, the parameters may be set in an operational program. Such case can be included in the scope of the invention.

The invention has been described in the typical embodiments. However, it should be understood to those skilled in the art that the above-described and other various changes, omissions and additions may be made without departing from the scope of the invention.

**Claims**

1. A robot controller for controlling a robot (R) having a plurality of articulated shafts (J1-J6), the robot controller performing soft control in which a virtual spring is made to act between a tool (H) of the robot (R) and an objective workpiece in a direction defined by a tool coordinate system in a fixed position-and-orientation with respect to the tool (H) of the robot (R) or a working coordinate system in a fixed position-and-orientation with respect to the objective workpiece, **characterized in that** the robot controller comprises:

   gain reducing arrangement (41, 42) for selecting an articulated shaft from a plurality of articulated shafts (J1-J6) of the robot (R) based on a soft control starting position where the soft control is started and the virtual spring when performing the soft control, and reducing at least one of position gain and speed gain of the certain articulated shaft lower than at least one of position gain normal value and speed gain normal value of the selected articulated shaft; and
   a correction torque reducing arrangement (43) for reducing a correction torque of the selected articulated shaft calculated based on the soft control starting position and the virtual spring lower than a correction torque normal value of the selected articulated shaft when performing the soft control is performed.

2. A robot controller for controlling a robot (R) having a plurality of articulated shafts (J1-J6), the robot controller performing soft control in which a virtual damper is made to act between a tool (H) of the robot (R) and an objective workpiece in a direction defined by a tool coordinate system in a fixed position-and-orientation with respect to the tool (H) of the robot (R) or a working coordinate system in a fixed position-and-orientation with respect to the objective workpiece, **characterized in that** the robot controller comprises:

   gain reducing arrangement (41, 42) for selecting an articulated shaft from the plurality of articulated shafts (J1-J6) of the robot (R) based on a soft control starting position where the soft control is started and the virtual

**EP 1 905 547 A2**

damper when performing the soft control, and reducing at least one of position gain and speed gain of the selected articulated shaft lower than at least one of position gain normal value and speed gain normal value of the selected articulated shaft; and

a correction torque reducing arrangement (43) for reducing a correction torque of the selected articulated shaft calculated based on the soft control starting position and the virtual damper lower than a correction torque normal value of the selected articulated shaft when performing the soft control.

3. The robot controller according to Claim 1 or 2, wherein a Jacobian matrix for conversion from the articulated shafts to the working coordinate system in the soft control starting position is calculated, and

   wherein an articulated shaft corresponding to a column having a largest absolute value in a row of the Jacobian matrix corresponding to a direction in which the soft control is performed, is selected as the selected articulated shaft.

4. The robot controller according to any one of Claims 1 to 3, wherein an amount for reducing at least one of position gain and speed gain in the selected articulated shaft is set automatically.

5. The robot controller according to any one of Claims 1 to 4, wherein an amount for reducing the correction torque for the selected articulated shaft is set automatically.

6. The robot controller according to any one of Claims 1 to 5, wherein before the soft control is started, the tool (H) of the robot (R) is preliminarily moved by a specified distance in a specified direction by normal control.

7. The robot controller according to any one of Claims 1 to 5, wherein when the soft control is performed, a specified amount of the correction torque in a specified direction is added.

8. The robot controller according to any one of Claims 1 to 5, wherein when the soft control is performed, a periodic correction torque is added to the torque.

9. The robot controller according to any one of Claims 1 to 8, wherein a coordinate system or tool coordinate system for performing the soft control is decided from at least two positions and orientations on a specified orthogonal coordinate system.

10. The robot controller according to Claim 6, wherein a direction for performing preliminary movement is decided from at least two positions and orientations on a specified orthogonal coordinate system.

11. The robot controller according to Claim 7, wherein a direction of the correction torque is decided from at least two positions and orientations on a specified orthogonal coordinate system.

9

# Fig.1

# Fig.2

LIQUID CRYSTAL DISPLAY — 15, TP
KEYBOARD — 16

ROM — 12a
RAM — 12b
NONVOLATILE MEMORY — 12c
HOST CPU — 11
RC

SHARED RAM — #1
SHARED RAM — #2
SHARED RAM — #n

DIGITAL SERVO CIRCUIT — C1
DIGITAL SERVO CIRCUIT — C2
DIGITAL SERVO CIRCUIT — Cn

MOTOR — M1
MOTOR — M2
MOTOR — Mn
RM

EP 1 905 547 A2

# Fig.3

/// ORTHOGONAL SOFT FLOAT PARAMETER SETTING ///////////////

```
PARAMETER SETTING NUMBER[50]
COORDINATE SYSTEM        [WORKING COORDINATE]
                         COORDINATE SYSTEM NUMBER  [10]  SETTING METHOD[DIRECT INPUT]
SOFTNESS                 [DIRECT INPUT]
                         X-DIRECTION  [SPRING]      0     [kgf/cm]
                         Y-DIRECTION  [SPRING]      0     [kgf/cm]
                         Z-DIRECTION  [SPRING]      200   [kgf/cm]
                         AROUND X     [SPRING]      2000  [kgfcm/deg]
                         AROUND Y     [SPRING]      2000  [kgfcm/deg]
                         AROUND Z     [DAMPER]      2000  [kgfcm/(deg/s)]
STARTING POSITION        J1=10.0[deg]        J2=45.00[deg]        J3=-5.00[deg]
                         J4=10.0[deg]        J5=-90.00[deg]       J6=135.00[deg]
GAIN REDUCTION SETTING   [DIRECT INPUT]
```

| | POSITION GAIN RATIO $\alpha p$ [%] | SPEED GAIN RATIO $\alpha v$ [%] | TORQUE RATIO $\alpha t$ [%] |
|---|---|---|---|
| J1 [ENABLED] | 5.0 | 5.0 | 0.00 |
| J2 [DISABLED] | *** | *** | *** |
| J3 [ENABLED] | 10.0 | 10.0 | 0.00 |
| J4 [DISABLED] | *** | *** | *** |
| J5 [DISABLED] | *** | *** | *** |
| J6 [DISABLED] | *** | *** | *** |

```
PRELIMINARY OPERATION    [DIRECT INPUT]
                         X-DIRECTION  -1.00[mm]          AROUND X  0.00[deg]
                                           :
```

EP 1 905 547 A2

# Fig.4

```
                    ( START )
                        │
    ┌───────────────────────────────────────────┐
    │  DETERMINE (Fx, Fy, Fz) FROM DEVIATIONS    │ ⌐101
    │  ON  Σ0  AND  (Kx, Ky, Kz)                 │
    └───────────────────────────────────────────┘
                        │
        ┌───────────────────────────────────┐
        │  TRANSFORM (Fx, Fy, Fz) INTO       │ ⌐102
        │  (Fx(n+1), Fy(n+1), Fz(n+1))       │
        └───────────────────────────────────┘
                        │
  ┌─────────────────────────────────────────────┐
  │  DETERMINE A TORQUE CORRECTION AMOUNT Ti FOR │ ⌐103
  │  THE AXIS i WITH THE NEWTON-EULER METHOD     │
  └─────────────────────────────────────────────┘
                        │
     ┌────────────────────────────────────────┐
     │  WRITE THE TORQUE CORRECTION AMOUNT     │ ⌐104
     │  Ti INTO THE SHARED RAM                 │
     └────────────────────────────────────────┘
                        │
                    (  END  )
```

# Fig.5

START

READ TORQUE CORRECTION AMOUNT T FROM THE SHARED RAM ⟋111

112⟍ IS THE ARTICULATED SHAFT TARGETED FOR GAIN REDUCTION

TRUE

113⟍ USE AFTER-REDUCTION GAINS Kps AND Kvs TO EXECUTE THE POSITION LOOP, INTEGRATION AND SPEED LOOP

114⟍ THE TORQUE CORRECTION AMOUNT T MULTIPLIED BY THE CORRECTION GAIN $\alpha t$ IS ADDED TO THE OUTPUT OF SPEED LOOP TO MAKE A TORQUE COMMAND

USE GAINS Kp' AND Kv' FOR NORMAL SOFT CONTROL TO EXECUTE THE POSITION LOOP, INTEGRATION AND SPEED LOOP ⟋115

ADD THE TORQUE CORRECTION AMOUNT T TO THE OUTPUT OF THE SPEED LOOP TO MAKE A TORQUE COMMAND ⟋116

END

# Fig.6

EP 1 905 547 A2

# Fig.7

# Fig.8

**EP 1 905 547 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2005219205 A